# EUROPÄISCHE PATENTSCHRIFT

(11) **EP 1 601 442 B1**
(45) Veröffentlichungstag und Bekanntmachung des Hinweises auf die Patenterteilung: **17.10.2007**
(21) Anmeldenummer: 04715248.3
(22) Anmeldetag: 27.02.2004
(51) Int. Cl.: B01D 50/00, B01D 45/08

(54) **TROPFENABSCHEIDEREINHEIT UND HIERMIT VERSEHENER RAUCHGASWÄSCHER**
DROPLET SEPARATOR UNIT AND FLUE GAS WASHER EQUIPPED WITH SAID UNIT
UNITE SEPARATEUR DE GOUTTES ET LAVEUR DE GAZ DE FUMEE EQUIPE DE CETTE UNITE

(30) Priorität: 28.02.2003 DE 10308666
(43) Veröffentlichungstag der Anmeldung: 07.12.2005
(73) Patentinhaber: Munters Euroform GmbH, 52072 Aachen (DE)
(72) Erfinder: WANDRES, Peter, 52066 Aachen (DE); KRAUSS, Roland, 41836 Hückelhoven (DE)
(74) Vertreter: Hauck Patent- und Rechtsanwälte
(86) Internationale Anmeldenummer: PCT/DE2004/000369
(87) Internationale Veröffentlichungsnummer: WO 2004/076029

(56) Entgegenhaltungen:
- DE-U- 9 304 777
- US-A- 3 811 252

## Beschreibung

Die vorliegende Erfindung betrifft eine Tropfenabscheidereinheit zum Abscheiden von Flüssigkeitspartikeln aus einem Gasstrom für Rauchgaswäscher u. dgl. Einrichtungen mit einem Tropfenabscheider.

Derartige Tropfenabscheidereinheiten sind bekannt. Sie funktionieren im allgemeinen derart, daß sie den mit der Flüssigkeit beladenen Gasstrom insbesondere mehrfach umlenken, wobei sich an den Umlenkstellen Flüssigkeitspartikel abscheiden, die durch Schwerkraftwirkung nach unten abfließen und aus dem Abscheider entfernt werden. Bei einer derartigen Tropfenabscheidereinheit ist es wichtig, die Einheit mit einer bestimmten Strömungsgeschwindigkeit anzuströmen, um die gewünschte Abscheidung von Flüssigkeitspartikeln zu erreichen. Ist diese Geschwindigkeit zu groß, tritt der gewünschte Abscheideeffekt nicht ein, so daß der Abscheider nur unvollkommen funktioniert.

Eine Tropfenabscheidereinheit der eingangs beschriebenen Art ist aus der DE 93 04 777 U bekannt. Der Tropfenabscheider dieser Einheit ist hierbei als Lamellenabscheider ausgebildet. Er ist in einem Gaswäscher angeordnet, und ihm ist eine Vielzahl von Einrichtungen vorgeschaltet, wie beispielsweise Strömungsgleichrichter, Strömungsleitbleche etc. Nachgeschaltet ist dem Lamellenabscheider ein Prallblechabscheider, der sich unmittelbar vor dem Ausgang des Gaswäschers befindet.

Solche Tropfenabscheidereinheiten werden insbesondere in Rauchgaswäschern eingesetzt und überdecken dort eine relativ große Fläche. Es versteht sich, daß hierbei die Tropfenabscheidereinheit nicht immer gleichmäßig, d.h. mit gleicher Strömungsgeschwindigkeit, angeströmt wird, so daß sich über den Bereich des Tropfenabscheiders unterschiedlich große Strömungsgeschwindigkeiten ergeben, die nicht zu einer gleichmäßigen Funktion der Tropfenabscheidereinheit führen. So weisen Bereiche der Tropfenabscheidereinheit, in denen die Einheit mit einer größeren Strömungsgeschwindigkeit angeströmt wird, nur eine unzureichende Leistung auf, da in diesen Bereichen keine Abscheidung oder nur eine unzureichende Tropfenabscheidung stattfindet. Solche Geschwindigkeitsspitzen wirken sich daher nachteilig auf die Leistung des Tropfenabscheiders aus.

Derartige Geschwindigkeitsspitzen oder Bereiche mit größerer Strömungsgeschwindigkeit entstehen beispielsweise dadurch, daß eine oder mehrere Tropfenabscheidereinheiten in einem Rauchgaswäscher kurz nach einer Umlenkungsstelle des zu waschenden Gasstromes angeordnet sind. So ist eine Tropfenabscheidereinheit beispielsweise in einem vertikalen Gasströmungskanal angeordnet, in dem das Gas von unten nach oben strömt, und zwar dort nur in einer relativ geringen Entfernung von einer Umlenkstelle, an der ein horizontaler Strömungskanal in den vertikalen Strömungskanal mündet. Durch die entsprechende Umlenkung des Gasstromes ergibt sich eine ungleichmäßige Strömungsgeschwindigkeitsverteilung über den Tropfenabscheider, wobei der der Umlenkstelle benachbarte Bereich des Tropfenabscheiders mit einer höheren Strömungsgeschwindigkeit beaufschlagt wird als der von der Umlenkstelle entfernte Bereich. Da bei solchen Rauchgaswäschern in der Regel mehrere Tropfenabscheidereinheiten hintereinander geschaltet sind, ergeben sich solche Effekte einer ungleichmäßigen Strömungsgeschwindigkeitsverteilung über mehrere Tropfenabscheidereinheiten. Natürlich können auch andere Gründe für eine solche ungleichmäßige Strömungsgeschwindigkeitsverteilung über den Tropfenabscheider ursächlich sein.

Der vorliegenden Erfindung liegt die Aufgabe zugrunde, eine Tropfenabscheidereinheit der angegebenen Art zu schaffen, die sich durch besonders gleichmäßige Strömungsverhältnisse auszeichnet.

Diese Aufgabe wird erfindungsgemäß bei einer Tropfenabscheidereinheit der angegebenen Art durch die kennzeichnenden Merkmale von Patentanspruch 1 gelöst.

Der Erfindung liegt daher der Gedanke zugrunde, eine Vergleichmäßigung der Strömungsgeschwindigkeit über den Tropfenabscheider dadurch herbeizuführen, daß diesem eine Einrichtung nachgeschaltet ist, die zu einer Verringerung der Strömungsgeschwindigkeit am Tropfenabscheider führt, und zwar ist diese Einrichtung dem Bereich des Tropfenabscheiders zugeordnet, der die im Vergleich zum übrigen Bereich des Tropfenabscheiders eine erhöhte Strömungsgeschwindigkeit aufweist. Dadurch wird in diesem Bereich des Tropfenabscheiders die erhöhte Strömungsgeschwindigkeit reduziert und vorzugsweise an die Strömungsgeschwindigkeit des übrigen Tropfenabscheiderbereiches angepaßt, so daß sich insgesamt über die Fläche des Tropfenabscheiders eine relativ gleichmäßige Strömungsgeschwindigkeit ergibt.

Der durch die Einrichtung zur Verringerung der Strömungsgeschwindigkeit erzeugte zusätzliche Strömungswiderstand wird zweckmäßigerweise an die Betriebsdaten und die Geometrie des jeweiligen Tropfenabscheiders angepaßt, so daß eine Reduzierung von Geschwindigkeitsspitzen am Tropfenabscheider erreicht und damit die Leistung des Tropfenabscheiders erheblich verbessert wird.

Vorzugsweise ist die Einrichtung zur Verringerung der Strömungsgeschwindigkeit als mehrere Durchtrittsöffnungen aufweisendes Flächengebilde ausgebildet. Ein derartiges Flächengebilde ist beispielsweise eine Lochplatte bzw. ein Lochblech oder ein Sieb oder ein Gitter. Wichtig ist, daß die Durchtrittsöffnungen eine bestimmte Größe besitzen, um ein relativ schnelles Verstopfen durch Verunreinigungen etc. zu verhindern. Die Durchtrittsöffnungen besitzen vorzugsweise einen Durchmesser von etwa 80 - 120 mm, wobei Durchmesser in einer Größenordnung um 100 mm bevorzugt werden. Besonders bevorzugt wird die Verwendung eines Lochbleches, das Löcher in der vorstehend angegebenen Größenordnung besitzt.

Es versteht sich, daß sich das Flächengebilde im Abstand vom Tropfenabscheider über den Abschnitt desselben erstreckt, der mit der größeren Strömungsgeschwindigkeit beaufschlagt wird. In vielen Fällen wird dieser Bereich ein zum Rand des Tropfenabscheiders benachbarter Bereich sein, so daß das Flächengebilde zur Verringerung der Strömungsgeschwindigkeit ebenfalls in diesem Randbereich angeordnet ist.

Um den Bereich zu ermitteln, der mit einer höheren Strömungsgeschwindigkeit beaufschlagt wird, werden insbesondere entsprechende Strömungsgeschwindigkeitsmessungen oder numerische Strömungsberechnungen durchgeführt. Der Bereich mit höherer Strömungsgeschwindigkeit kann dann eingegrenzt werden, und in Abhängigkeit davon kann der Strömungswiderstand ermittelt werden, den die vorzusehende Einrichtung zur Verringerung der Strömungsgeschwindigkeit des Gasstromes aufbauen soll, d.h. die Größe der Durchtrittsöffnungen kann festgelegt werden. In diese Ermittlungen kann auch der Abstand der Einrichtung zur Verringerung der Strömungsgeschwindigkeit vom Tropfenabscheider einbezogen werden.

Bei einer anderen Ausführungsform der Erfindung wird die Einrichtung zur Verringerung der Strömungsgeschwindigkeit des Gasstromes durch mehrere parallel zueinander angeordnete oder sich kreuzende Stäbe, Platten, Rohre u. dgl. gebildet. Auch hier werden die zwischen den Stäben, Platten, Rohren gebildeten Durchtrittsöffnungen in ihrer Größe so festgelegt, daß sich eine Verringerung der Strömungsgeschwindigkeit am Tropfenabscheider ergibt und vorzugsweise insgesamt gleichmäßige Strömungsgeschwindigkeitsverhältnisse über den gesamten Tropfenabscheider erreicht werden.

Bei der Anordnung von derartigen Rohren kann man sich zunutze machen, daß derartige Tropfenabscheider, insbesondere solche in Rauchgaswäschern, mit Reinigungseinrichtungen versehen sind, die ein zunehmendes Verschmutzen und damit einhergehendes Verstopfen der Tropfenabscheider verhindern. Solche Reinigungssysteme werden von Rohrsystemen gebildet, die mit entsprechenden Düsen zur Abgabe eines Reinigungsmittels versehen sind. In ein derartiges Rohrsystem können nunmehr die Rohre einer Einrichtung zur Verringerung der Strömungsgeschwindigkeit des Gasstromes integriert werden, d.h. zusätzlich zu den Bedüsungsrohren werden in dem Bereich, in dem die Strömungsgeschwindigkeit verringert werden soll, Rohre angeordnet, die den gewünschten Strömungswiderstand vorsehen. Solche Rohre können parallel zueinander oder sich überkreuzend angeordnet sein. Auf diese Weise kann das für die Bedüsungsrohre vorgesehene Tragsystem auch für die den Strönmungswiderstand bildenden Rohre genutzt werden.

Die Gasdurchtrittsbereiche (Löcher) der Einrichtung zur Verringerung der Strömungsgeschwindigkeit des Gasstromes sind vorzugsweise gleich groß ausgebildet, um den Aufbau einer derartigen Einrichtung zu vereinfachen und die Herstellkosten derselben zu senken. Mit einer derartigen Einrichtung wird daher eine gleichmäßige Verringerung der Strömungsgeschwindigkeit erzielt. Eine weitere Ausführungsform der Erfindung zeichnet sich jedoch dadurch aus, daß die Gasdurchtrittsbereiche der Einrichtung zur Verringerung der Strömungsgeschwindigkeit unterschiedlich groß und an die Strömungsgeschwindigkeitsverteilung am Tropfenabscheider angepaßt sind. Eine solche Einrichtung kommt beispielsweise dann zum Einsatz, wenn sehr unterschiedliche Strömungsgeschwindigkeitsverhältnisse am Tropfenabscheider vorhanden sind. Hierbei sind beispielsweise die Gasdurchtrittsbereiche, die den Abschnitten mit größerer Strömungsgeschwindigkeit zugeordnet sind, kleiner ausgebildet als die Bereiche, die den Abschnitten mit geringerer Strömungsgeschwindigkeit zugeordnet sind. Die Größe der Bereiche kann auch kontinuierlich von einer Seite bis zur anderen Seite zunehmen oder abnehmen. Es sind hierbei sehr genaue Anpassungsmöglichkeiten gegeben, die allerdings mit einem erhöhten Herstellaufwand verbunden sind.

Die Erfindung betrifft ferner einen Rauchgaswäscher, der eine Tropfenabscheidereinheit der angegebenen Art aufweist.

Bei einem derartigen Rauchgaswäscher ist die Einrichtung zur Verringerung der Strömungsgeschwindigkeit vorzugsweise kurz vor dem Wäscheraustritt angeordnet, wobei dieser Einrichtung ein oder mehrere Tropfenabscheider vorgeschaltet sein können. Bei einem solchen Rauchgaswäscher findet die Ausführungsform der Erfindung bevorzugt Anwendung, bei der die Rohre in das zu Reinigungszwecken dienende Bedüsungssystem des Rauchgaswäschers integriert sind. Durch die konstruktive Einpassung der den Strömungswiderstand bildenden Rohrreihen in das vorhandene Bedüsungsystem des Tropfenabscheiders entsteht ein konstruktiv geringer Aufwand. Da die Spalte zwischen den Rohren auf jeden Fall größer als 50 mm ausfallen werden, ist die Konstruktion verschmutzungsarm bzw. leicht zu reinigen.

Die Erfindung wird nachfolgend anhand von Ausführungsbeispielen in Verbindung mit der Zeichnung im einzelnen erläutert. Es zeigen:
- Figur 1: eine schematische Darstellung eines Tropfenabscheiders mit zugehöriger ungleichmäßiger Strömungsgeschwindigkeitsverteilung;
- Figur 2: den Tropfenabscheider der Figur 1 in Verbindung mit einer Einrichtung zur Verringerung der Strömungsgeschwindigkeit sowie der hierdurch erzielten gleichmäßigen Strömungsgeschwindigkeitsverteilüng;
- Figur 3: eine schematische Darstellung eines Teiles eines Rauchgaswäschers mit zwei im vertikalen Gaskanal angeordneten Tropfenabscheidern;
- Figur 4: den Rauchgaswäscher der Figur 3, bei dem die Tropfenabscheider eine Einrichtung zur Verringerung der Strömungsgeschwindigkeit aufweisen; und
- Figur 5: den in den Figuren 3 und 4 gezeigten Rauchgaswäscher, wobei die Tropfenabscheider mit einer anderen Ausführungsform einer Einrichtung zur Verringerung der Strömungsgeschwindigkeit des Gasstromes versehen sind.

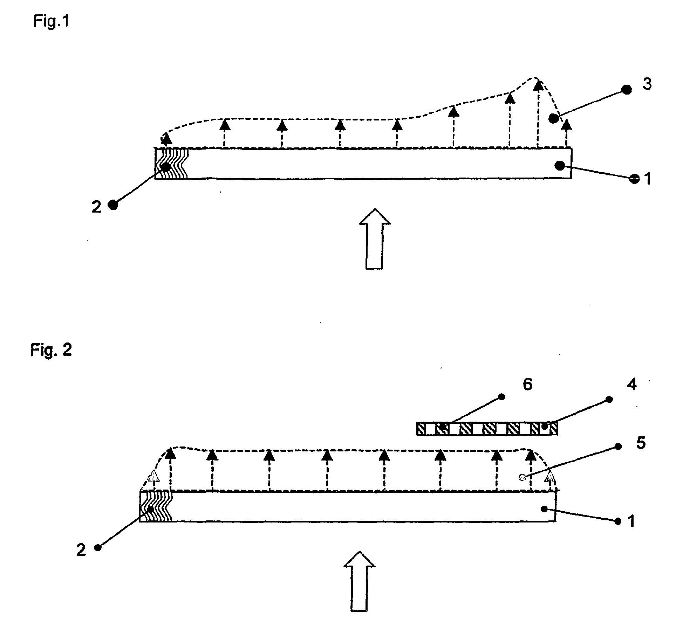

Bei dem in Figur 1 schematisch im Vertikalschnitt dargestellten Tropfenabscheider 1 handelt es sich um einen Lamellentropfenabscheider, der aus einer Vielzahl von parallel zueinander angeordneten Lamellen 2 besteht, welche mehrere Umlenkstellen für den den Tropfenabscheider in der Figur von unten anströmenden Gasstrom besitzen. Die Ausbildung eines derartigen Tropfenabscheiders ist bekannt und muß an dieser Stelle im einzelnen nicht mehr beschrieben werden. Bei dem hier dargestellten Fall wird der Tropfenabscheider 1 nicht gleichmäßig angeströmt, sondern es ergibt sich eine bei 3 dargestellte ungleichmäßige Verteilung der Strömungsgeschwindigkeiten des Gasstromes. Diese Strömungsgeschwindigkeiten besitzen ein Maximum in der Nähe des in der Figur rechten Randes des Tropfenabscheiders.

Um diese hohen Strömungsgeschwindigkeiten zu verringern und über den Querschnitt des Tropfenabscheiders eine gleichmäßige Strömungsgeschwindigkeitsverteilung zu erhalten, ist dem Tropfenabscheider 1 mit Abstand in Strömungsrichtung eine Einrichtung 4 zur Verringerung der Strömungsgeschwindigkeit des Gasstromes nachgeschaltet, wie in Figur 2 gezeigt ist. Diese Einrichtung 4 besitzt die Form eines Lochblechs, das mit geeigneten Durchtrittslöchern 6 versehen ist, welche relativ groß ausgebildet sind und bei üblichen Tropfenabscheiderabmessungen einen Durchmesser in der Größenordnung von 100 mm besitzen. Das Lochblech 4 erstreckt sich über den Bereich des Tropfenabscheiders 1, der mit der erhöhten Strömungsgeschwindigkeit beaufschlagt wird, wie in Figur 1 gezeigt. Durch Anordnung der Einrichtung 4, die in dem gewünschten Bereich den Strömungswiderstand erhöht, wird die Strömungsgeschwindigkeit am Tropfenabscheider 1 verringert, so daß sich die in Figur 2 bei 5 dargestellte gleichmäßige Strömungsgeschwindigkeitsverteilung über den Querschnitt des Tropfenabscheiders ergibt.

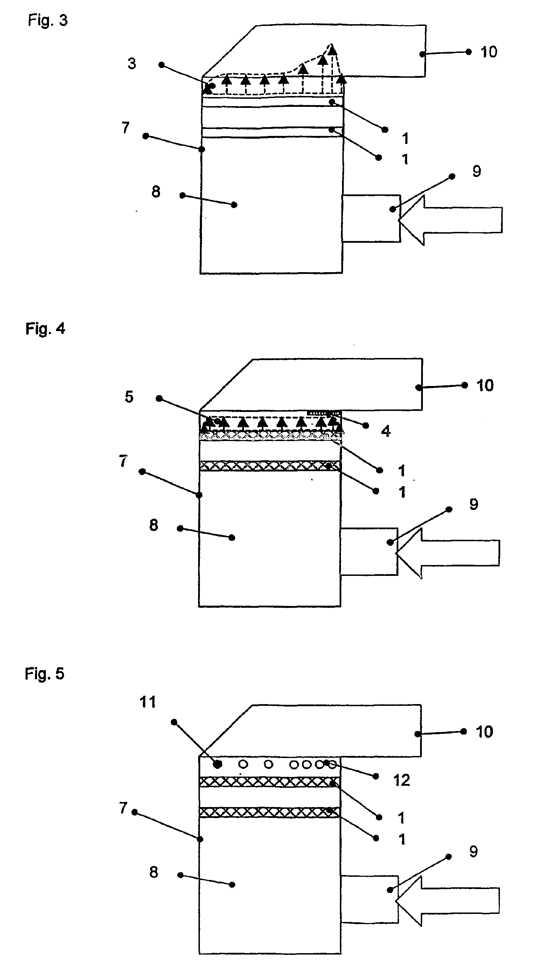

Die Figuren 3 bis 5 zeigen die Verhältnisse bei einem schematisch dargestellten Rauchgaswäscher. Die Figuren zeigen den vertikal angeordneten Gasabzugskanal 8 des Rauchgaswäschers 7, in den im unteren Bereich der Figuren 3 bis 5 ein horizontaler Gaskanal 9 mündet. Der den horizontal verlaufenden Gaskanal 9 passierende Gasstrom, der einem Waschprozeß zur unterziehen ist, gelangt in der durch den Pfeil angedeuteten Richtung in den vertikalen Gaskanal 8 und wird dabei um einen Winkel von 90° nach oben umgelenkt. Der Gasstrom passiert auf seinem Weg nach oben einen ersten Tropfenabscheider 1 sowie einen mit Abstand zu diesem angeordneten zweiten Tropfenabscheider 1. Er strömt dann weiter nach oben und gelangt schließlich in einen horizontalen Gaskanal 10, wobei er erneut umgelenkt wird und den Rauchgaswäscher in den Figuren nach rechts verläßt.

Durch diese Führung des Gasstromes treten an den beiden Tropfenabscheidern 1 über deren Querschnitt ungleichmäßige Strömungsgeschwindigkeiten auf, die mit der Strömungsgeschwindigkeitsverteilung 3 dargestellt sind, wobei diese Strömungsgeschwindigkeitsverteilung der in Figur 1 im wesentlichen entspricht.

Figur 4 zeigt den Rauchgaswäscher der Figur 3, wobei in diesem Falle beide Tropfenabscheider 1 mit einer Einrichtung 4 zur Verringerung der Strömungsgeschwindigkeit des Gasstromes versehen sind, so daß sich die in Figur 2 gezeigten Verhältnisse ergeben. Die hierdurch erreichten vergleichmäßigte Strömungsgeschwindigkeitsverteilung ist bei 5 dargestellt und entspricht der der Figur 2.

Figur 5 zeigt den Rauchgaswäscher 7 der Figuren 3 und 4, der in diesem Falle mit einer anderen Ausführungsform einer Einrichtung zur Verringerung der Strömungsgeschwindigkeit des Gasstromes versehen ist. Diese Einrichtung wird von einer Rohrreihe 12 gebildet, die zwischen den vorhandenen Bedüsungsrohren 11 eines Reinigungssystems für die Tropfenabscheider 1 angeordnet ist. Die in Figur 5 gezeigten größeren Rohre 11 bilden hierbei die Bedüsungsrohre, während die kleineren Rohre 12 die die Einrichtung zur Verringerung der Strömungsgeschwindigkeit bildenden Rohre vorsehen. Natürlich ist die gesamte Anordnung nur schematisch dargestellt. Man erkennt, daß auch bei dieser Ausführungsform ein Bereich erhöhten Strömungswiderstandes im rechten Teil über den beiden Tropfenabscheidern 1 gebildet wird, der eine Reduzierung der Strömungsgeschwindigkeit in diesem Bereich und eine Vergleichmäßigung der Strömungsgeschwindigkeit über den gesamten Querschnitt der Tropfenabscheider bewirkt.

## Patentansprüche

1. Tropfenabscheidereinheit zum Abscheiden von Flüssigkeitspartikeln aus einem Gasstrom für Rauchgaswäscher (7) u. dgl. Einrichtungen mit einem Tropfenabscheider (1), **dadurch gekennzeichnet, dass** die Einheit im Abstand von der Auslassseite des Tropfenabscheiders (1) hinter derselben eine sich über einen Teilabschnitt der Fläche des Tropfenabscheiders (1) erstreckende Einrichtung (4) zur Verringerung der Strömungsgeschwindigkeit des Gasstromes an diesem Flächenteilabschnitt des Tropfenabscheiders (1) aufweist.

2. Tropfenabscheidereinheit nach Anspruch 1, **dadurch gekennzeichnet, daß** die Einrichtung (4) zur Verringerung der Strömungsgeschwindigkeit als mehrere Durchtrittsöffnungen (6) aufweisendes Flächengebilde ausgebildet ist.

3. Tropfenabscheidereinheit nach Anspruch 2, **dadurch gekennzeichnet, daß** die Einrichtung (4) eine Lochplatte bzw. ein Lochblech ist.

4. Tropfenabscheidereinheit nach Anspruch 2, **dadurch gekennzeichnet, daß** die Einrichtung (4) ein Gitter oder Sieb ist.

5. Tropfenabscheidereinheit nach Anspruch 1, **dadurch gekennzeichnet, daß** die Einrichtung durch mehrere parallel zueinander angeordnete oder sich kreuzende Stäbe, Platten, Rohre (12) u. dgl. gebildet ist.

6. Tropfenabscheidereinheit nach Anspruch 5, **dadurch gekennzeichnet, daß** die Rohre (12) zusätzlich zu den Rohren (11) eines Bedüsungssystems angeordnet sind.

7. Tropfenabscheidereinheit nach Anspruch 6, **dadurch gekennzeichnet, daß** die Rohre (12) in das Bedüsungssystem integriert sind.

8. Tropfenabscheidereinheit nach einem der vorangehenden Ansprüche, **dadurch gekennzeichnet, daß** die Gasdurchtrittsbereiche der Einrichtung (4) zur Verringerung der Strömungsgeschwindigkeit unterschiedlich groß und an die Strömungsgeschwindigkeitsverteilung am Tropfenabscheider (1) angepaßt sind.

9. Rauchgaswäscher, **dadurch gekennzeichnet, daß** er eine Tropfenabscheidereinheit nach einem der Ansprüche 1 bis 8 aufweist.

10. Rauchgaswäscher nach Anspruch 9, **dadurch gekennzeichnet, daß** die Einrichtung (4) zur Verringerung der Strömungsgeschwindigkeit kurz vor dem Wäscheraustritt angeordnet ist.

## Claims

1. A droplet separator unit for separating liquid particles from a gas flow for flue gas washers (7) and similar means comprising a droplet separator (1), **characterized in that** the unit, spaced from the discharge side of the droplet separator (1) behind the same, includes means extending over a section of the surface of the droplet separator (1) for reducing the flow velocity of the gas flow at this surface section of the droplet separator (1).

2. The droplet separator unit according to claim 1, **characterized in that** the means (4) for reducing the flow velocity is formed as surface formation having several flow apertures (6).

3. The droplet separator unit according to claim 2, **characterized in that** the means (4) is a hole plate or a hole sheet.

4. The droplet separator unit according to claim 2, **characterized in that** the means (4) is a grid or sieve.

5. The droplet separator unit according to claim 1, **characterized in that** the means is formed by several parallel or crossing rods, plates, tubes (12) etc.

6. The droplet separator unit according to claim 5, **characterized in that** the tubes (12) are disposed additionally to the tubes (11) of a sprinkling system.

7. The droplet separator unit according to claim 6, **characterized in that** the tubes (12) are integrated into the sprinkling system.

8. The droplet separator unit according to one of the preceding claims, **characterized in that** the gas passing portions of the means (4) for reducing the flow velocity have a different size and are adapted to the flow velocity distribution at the droplet separator (1).

9. A flue gas washer, **characterized in that** it includes a droplet separator unit according to one of the claims 1 to 8.

10. The flue gas washer according to claim 9, **characterized in that** the means (4) for reducing the flow velocity is disposed shortly before the washer outlet.

## Revendications

1. Unité séparateur de gouttes pour séparer des particules de liquide d'un courant de gaz pour des laveurs de gaz de fumée (7) et des dispositifs similaires avec un séparateur de gouttes (1), **caractérisée en ce que** l'unité présente à distance du côté sortie du séparateur de gouttes (1) derrière celui-ci un dispositif (4) qui s'étend sur une section partielle de la surface du séparateur de gouttes (1) pour réduire la vitesse d'écoulement du courant de gaz sur cette section partielle de surface du séparateur de gouttes (1).

2. Unité séparateur de gouttes selon la revendication 1, **caractérisée en ce que** le dispositif (4) pour réduire la vitesse d'écoulement est configuré comme une structure en nappe présentant plusieurs ouvertures de passage (6).

3. Unité séparateur de gouttes selon la revendication 2, **caractérisée en ce que** le dispositif (4) est une plaque perforée ou encore une tôle perforée.

4. Unité séparateur de gouttes selon la revendication 2, **caractérisée en ce que** le dispositif (4) est une grille ou un crible.

5. Unité séparateur de gouttes selon la revendication 1, **caractérisée en ce que** le dispositif est formé par plusieurs barres, plaques, tuyaux (12) ou similaires disposés parallèlement entre eux ou se croisant.

6. Unité séparateur de gouttes selon la revendication 5, **caractérisée en ce que** les tubes (12) sont disposés en plus des tubes 11 d'un système d'arrosage.

7. Unité séparateur de gouttes selon la revendication 6, **caractérisée en ce que** les tubes (12) sont intégrés dans le système d'arrosage.

8. Unité séparateur de gouttes selon une quelconque des revendications précédentes, **caractérisée en ce que** les zones de passage de gaz du dispositif (4) pour réduire la vitesse d'écoulement sont de grandeurs différentes et sont adaptées à la distribution de la vitesse d'écoulement sur le séparateur de gouttes (1).

9. Laveur de gaz de fumée, **caractérisé en ce qu'**il présente une unité séparateur de gouttes selon l'une des revendications 1 à 8.

10. Laveur de gaz de fumée selon la revendication 9, **caractérisé en ce que** le dispositif (4) pour réduire la vitesse d'écoulement est disposé peu avant la sortie du laveur.
